# EUROPÄISCHE PATENTSCHRIFT

(11) **EP 0 822 026 B1**
(45) Veröffentlichungstag und Bekanntmachung des Hinweises auf die Patenterteilung: **30.12.1998**
(21) Anmeldenummer: 96112578.8
(22) Anmeldetag: 03.08.1996
(51) Int. Cl.: B23K 11/00, B23K 11/10, B23K 11/14, B23K 11/16, F28F 1/00, F28F 3/02, F28F 9/26, B21D 39/03

(54) **Verfahren zur Herstellung von korrosionsbeständigen Wärmeübertragern**
Method of manufacturing corrosion resistant heat exchangers
Procédé de fabrication d'échangeurs de chaleur résistants à la corrosion

(43) Veröffentlichungstag der Anmeldung: 04.02.1998
(73) Patentinhaber: Balcke-Dürr GmbH, 40882 Ratingen (DE)
(72) Erfinder: Podhosky, Miroslan, Dr.-Ing., D-40882 Ratingen (DE); Leitz, Richard, Dipl.-Ing., D-40721 Hilden (DE); Holten, Wolfgang, Dipl.-Ing., D-40625 Düsseldorf (DE)
(74) Vertreter: Stenger, Watzke & Ring Patentanwälte

(56) Entgegenhaltungen:
- EP-A- 0 339 206
- EP-A- 0 490 210
- GB-A- 2 087 284
- JP-A-57 095 820

## Beschreibung

Die Erfindung betrifft ein Verfahren zur Herstellung von korrosionsbeständigen Wärmeübertragern unter Verwendung von zumindest auf einem Teil ihrer Oberfläche mit die Wärmeübertragungsfläche vergrößernden Rippen versehenen Rohren, wobei die Rohre und die Rippen miteinander verschweißt sind, sowie einen derartigen Wärmeübertrager. Schließlich betrifft die Erfindung ein mit derartigen Wärmeübertragern ausgestattetes Kraftwerk und ein Verfahren zur Erzeugung elektrischer Energie in derartigen Kraftwerken.

Aus der DE 43 22 405 C2 sind rohrförmige Elemente für Wärmeübertrager sowie ein Verfahren zu ihrer Herstellung bekannt, wobei die Rohre und die zumindest auf einem Teil ihrer Oberfläche befestigten Rippen aus Stahl bestehen und miteinander durch ein Kondensator-Entladungs-Schweißverfahren verschweißt werden. Wegen der hohen Wärmebelastung beim Verschweißen ist das aus der DE 43 22 405 C2 bekannte Verfahren nicht anwendbar, wenn die Rohre und/oder Rippen der Wärmeübertragungselemente mit einer Korrosionsschutzschicht versehen sind, da diese zumindest örtlich zerstört und damit unwirksam wird.

Um korrosionsbeständige Wärmeübertragungselemente herstellen zu können, wird mit der EP 0 417 894 A2 ein Herstellungsverfahren vorgeschlagen, bei dem aluminiumbeschichtete Stahlrohre mit Rippen aus Aluminium miteinander dadurch verlötet werden, daß sie für eine bestimmte Zeitspanne einer Temperaturerhöhung ausgesetzt werden, welche ein zumindest teilweises Schmelzen und damit Ineinanderverlaufen der Aluminiumschichten bewirkt, ohne das Entstehen eines Eisen-Aluminium-Verbundes hervorzurufen. Da die Randbedingungen des aus der EP 0 417 894 A2 bekannten Lötverfahrens zur Erzielung einer festen Verbindung zwischen Rippe und Rohr sehr exakt eingehalten werden müssen, ist dieses bekannte Verfahren sehr aufwendig und für eine wirtschaftliche großtechnische Anwendung nicht geeignet.

Der Erfindung liegt die **Aufgabe** zugrunde, ein Verfahren der eingangs beschriebenen Art zur großtechnischen Herstellung von korrosionsbeständigen Wärmeübertragern unter Verwendung von zumindest auf einem Teil ihrer Oberfläche mit die Wärmeübertragungsfläche vergrößernden Rippen versehenen Rohren zu schaffen, das für Rohre und/oder Rippen geeignet ist, die mit einer Korrosionsschutzschicht versehenen sind.

Die **Lösung** dieser Aufgabenstellung durch die Erfindung ist hinsichtlich des Verfahrens zur Herstellung von korrosionsbeständigen Wärmeübertragern dadurch gekennzeichnet, daß die Rohre und/oder Rippen mit einer Korrosionsschutzschicht versehen sind und daß die Rippen und die Rohre auf einem Teil ihrer Berührungsflächen durch Durchsetzfügen miteinander verbunden und im Bereich mindestens einiger dieser Fügestellen miteinander verschweißt werden.

Obwohl auch beim erfindungsgemäßen Verfahren im eigentlichen Schweißbereich die Korrosionsschutzschicht zerstört wird, hat diese Zerstörung keine nachteiligen Folgen für die Korrosionsbeständigkeit des Rippenrohres, weil die Zerstörung in einem Bereich stattfindet, in dem die Rippen und das Rohr durch Durchsetzfügen miteinander verbunden sind. Dieses Durchsetzfügen führt zu einem Versatz in der Berührungsfläche, der rings um die Fügestelle das Material von Rippe und Rohr mit der dazwischen liegenden Korrosionsschutzschicht derart stark miteinander verpreßt, daß die Berührungsfläche zwischen Rippe und Rohr im Bereich der eigentlichen Fügestelle nicht mehr mit aggressiven Medien beaufschlagt werden kann. Eine Beschädigung oder gar Zerstörung der Korrosionsschutzschicht im Bereich dieser Fügestelle ist damit im Hinblick auf die Korrosionsbeständigkeit des Wärmeübertragers unschädlich.

Gemäß weiteren Merkmalen der Erfindung kann die Korrosionsschutzschicht aus einem Schutzlack, einer Kunststoffbeschichtung, einem Leichtmetall oder einer Leichtmetallegierung bestehen, beispielsweise aus Aluminium oder dessen Legierungen, oder aus einem Schwermetall oder einer Schwermetallegierung, beispielsweise Chrom oder Zink oder deren Legierungen, die galvanisch oder durch Plattieren auf das Rohr bzw. die Rippe aufgebracht werden.

Bei einer bevorzugten Ausführungsform der Erfindung erfolgt das Durchsetzfügen jeweils mittels eines Stempels und einer Matrize, die einen Versatz der Berührungsfläche zwischen Rippe und Rohr um mindestens die Wandstärke des Rohres bewirken.

Der erfindungsgemäße Wärmeübertrager mit einer Mehrzahl von zumindest auf einem Teil ihrer Oberfläche mit die Wärmeübertragungsfläche vergrößernden Rippen versehenen Rohren ist erfindungsgemäß dadurch gekennzeichnet, daß die Rohre und/oder die Rippen mit einer Korrosionsschutzschicht versehen sind, daß die Rippen und die Rohre auf einem Teil ihrer Berührungsfläche miteinander durch Durchsetzfügen formschlüssig verbunden sind und daß die Rippen und die Rohre zumindest im Bereich einiger dieser Fügestellen miteinander verschweißt sind. Für einen derartigen erfindungsgemäßen Wärmeübertrager ergeben sich die eingangs geschilderten Vorteile.

Das erfindungsgemäße Kraftwerk umfaßt mindestens einen Dampferzeuger zum Betrieb mindestens einer Turbine, die einen Generator zur Erzeugung elektrischer Energie antreibt, sowie mindestens einen Wärmeübertrager mit einer Mehrzahl von zumindest auf einem Teil ihrer Oberfläche mit die Wärmeübertragungsfläche vergrößernden Rippen versehenen Rohren, die mit den Rippen verschweißt sind, wobei die Rohre und/oder die Rippen mit einer Korrosionsschutzschicht versehen sind, die Rippen und die Rohre auf einem Teil ihrer Berührungsfläche miteinander durch Durchsetzfügen formschlüssig verbunden sind und die Rippen und die Rohre zumindest im Bereich einiger dieser Fügestellen miteinander verschweißt sind.

Das erfindungsgemäße Verfahren zur Erzeugung elektrischer Energie ist schließlich durch ein Kraftwerk gekennzeichnet, das gemäß den voranstehenden Merkmalen ausgebildet ist.

Auf der Zeichnung ist ein Ausführungsbeispiel eines nach dem erfindungsgemäßen Verfahren hergestellten Rippenrohres dargestellt, und zwar zeigen:
- Fig. 1: einen Längsschnitt durch ein Rippenrohr mit auf einer Flachseite des Rohres angebrachten Rippen,
- Fig. 2: einen Querschnitt durch das Rippenrohr gemäß der Schnittlinie II-II in Fig. 1,
- Fig. 3: eine vergrößerte Schnittdarstellung des in Fig. 2 eingekreisten Bereiches III zur Darstellung des Durchsetzfügens im Ausgangszustand,
- Fig. 4: eine der Fig. 3 entsprechende Darstellung nach Beendigen des Durchsetzfügens,
- Fig. 5: den Endzustand der im Schnitt dargestellten Fügestelle entsprechend den Figuren 3 und 4 und
- Fig. 6: eine vergrößerte Darstellung des Schnittes durch die Fügestelle nach dem Verschweißen.

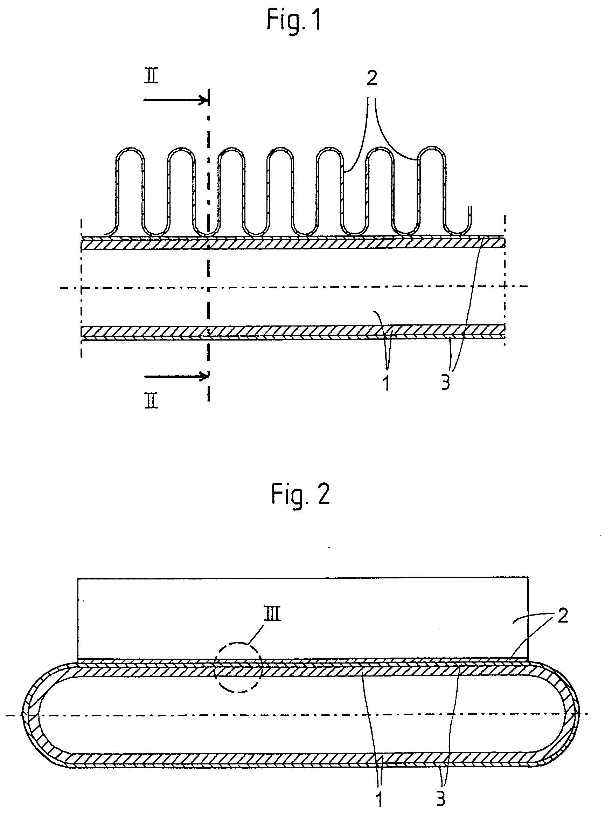

Die Figuren 1 und 2 zeigen schematisch ein Ausführungsbeispiel eines zur Herstellung von korrosionsbeständigen Wärmeübertragern einzusetzenden flachen Rohres 1, das auf der Oberfläche einer seiner Flachseiten mit die Wärmeübertragungsfläche vergrößernden Rippen 2 versehen ist. Beim Ausführungsbeispiel werden diese Rippen 2 durch ein gewelltes Band gebildet, dessen Wellen rechtwinklig zur Rohrlängsachse verlaufen und mindestens in Teilbereichen der Berührungsfläche zwischen dem Fußbereich der Rippen 2 und der Mantelfläche des Rohres 1 mit dem Rohr 1 verschweißt sind.

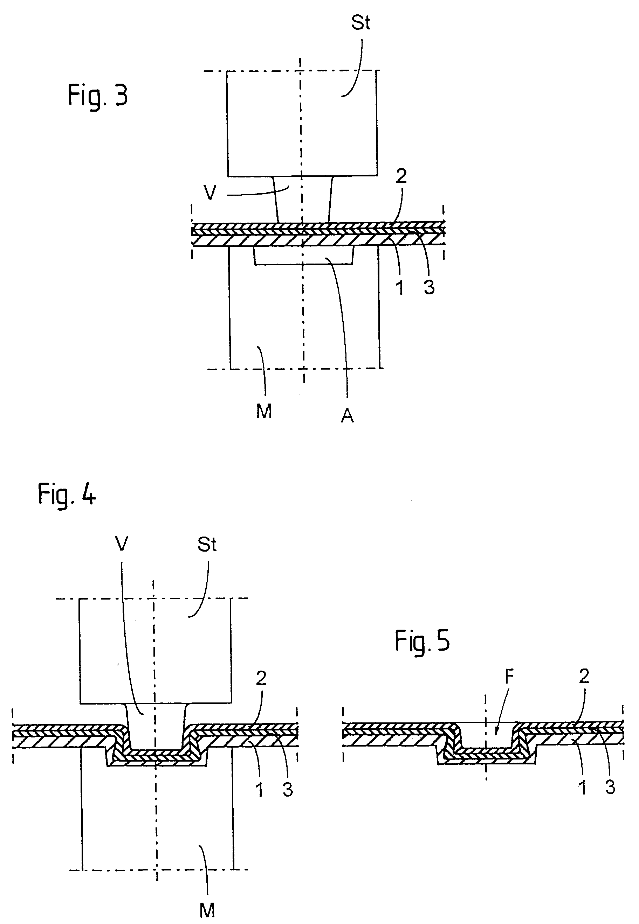

Wie am besten aus der vergrößerten Schnittdarstellung des in Fig. 2 eingekreisten Bereiches III in Fig. 3 hervorgeht, besteht das Rohr 1 beim dargestellten Ausführungsbeispiel aus Stahl; es ist auf seiner Außenfläche mit einer Korrosionsschutzschicht 3 versehen. Diese Korrosionsschutzschicht 3 besteht beim Ausführungsbeispiel aus Aluminium, das durch Beschichten oder Platieren auf das Rohr 1 aufgebracht worden ist. Auch die Rippen 2 sind beim Ausführungsbeispiel aus Aluminium hergestellt. Auf diese Weise ergibt sich ein korrosionsbeständiges Rippenrohr, das seinerseits zur Herstellung korrosionsbeständiger Wärmeübertrager verwendet wird.

Um die Rippen 2 aus Aluminium oder einer Aluminiumlegierung mit dem mit der Korrosionsschutzschicht 3 versehene Rohr 1 zu verschweißen, werden Teilbereiche der Berührungsflächen zwischen den Rippen 2 und dem Rohr 1 durch Durchsetzfügen miteinander verbunden. Im Bereich der hierdurch entstehenden Fügestellen erfolgt eine Verschweißung zwischen den Rippen 2 und dem Rohr 1. Ein derartiger Durchsetzfügevorgang ist in den Schnittdarstellungen der Figuren 3 bis 5 schematisch dargestellt.

Die Fig. 3 zeigt einen Schnitt durch ein mit einer Korrosionsschutzschicht 3 aus Aluminium oder einer Aluminiumlegierung versehenes Rohr 1 aus Stahl sowie durch eine Rippe 2 aus Aluminium oder einer Aluminiumlegierung im Bereich einer Berührungsfläche zwischen diesen Teilen. Die Unterseite des Rohres 1 liegt gemäß Fig. 3 auf einer Matrize M, die mit einer Aussparung A versehen ist. Im Bereich dieser Aussparung A greift der Vorsprung V eines Stempels St an. Die Querschnittsabmessungen des Stempels St sind hierbei geringer als die der Aussparung A in der Matrize M.

Wenn nunmehr gemäß Fig. 4 der Stempel St mit seinem Vorsprung V in die Aussparung A der Matrize M gedrückt wird, verformt sich sowohl das Material des Rohres 1 und seiner Korrosionsschutzschicht 3 als auch der Rippe 2, so daß sich die in Fig. 4 dargestellte Verbindung zwischen Rippe 2 und Rohr 1 ergibt. Durch das Fließen der Materialien von Rohr 1, Korrosionsschutzschicht 3 und Rippe 2 gemäß der Darstellung in Fig. 4 ergibt sich eine formschlüssige Verbindung, bei der die Materialien im Bereich der vorzugsweise rotationssymmetrischen Mantelfläche der Fügestelle F miteinander verkeilen, wie dies insbesondere aus der Schnittdarstellung in Fig. 5 hervorgeht.

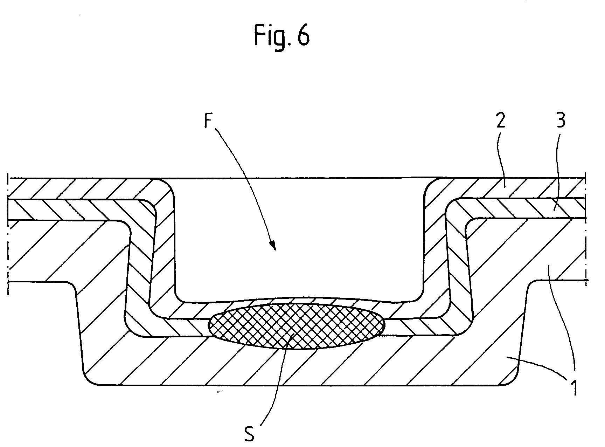

Zusätzlich zu dieser formschlüssigen Verbindung einiger Teilbereiche aufgrund des voranstehend beschriebenen Durchsetzfügens erfolgt eine Verschweißung zwischen der Rippe 2 und dem Rohr 1 im Bereich der Fügestellen F, wie aus Fig. 6 hervorgeht. Bei diesem Verschweißen wird zwar durch die Schweißstelle S die Korrosionsschutzschicht 3 des Rohres 1 zerstört; diese Zerstörung liegt jedoch im Bereich des Bodens der Fügestelle F. Die durch Verkeilen der Materialien von Rippe 2, Korrosionsschutzschicht 3 und Rohr 1 entstandene formschlüssige Verbindung im Bereich der rotationssymmetrischen Mantelfläche der Fügestelle F verhindert jedoch ein Eindringen korrosiver Materialien in den Bereich der Schweißstelle S. Trotz der Beschädigung der Korrosionsschutzschicht 3 in diesem Bereich bleibt somit der Korrosionsschutz des Rohres 1 aufrechterhalten.

Diese Aufrechterhaltung des Korrosionsschutzes ist unabhängig davon, ob die Korrosionsschutzschicht 3 gemäß dem voranstehend erläuterten Ausführungsbeispiel aus einem Leichtmetall oder einer Leichtmetallegierung besteht oder ob sie aus einem Schutzlack oder einem Kunststoff hergestellt worden ist. Die nach dem voranstehend erläuterten Verfahren hergestellten Rippenrohre führen somit bei ihrer Verwendung zu korrosionsbeständigen Wärmeübertragern.

### Bezugszeichenliste

- 1: Rohr
- 2: Rippe
- 3: Korrosionsschutzschicht
- A: Aussparung
- F: Fügestelle
- M: Matrize
- S: Schweißstelle
- St: Stempel
- V: Vorsprung

## Patentansprüche

1. Verfahren zur Herstellung von korrosionsbeständigen Wärmeübertragern unter Verwendung von zumindest auf einem Teil ihrer Oberfläche mit die Wärmeübertragungsfläche vergrößernden Rippen (2) versehenen Rohren (1), wobei die Rohre (1) und Rippen (2) miteinander verschweißt sind,
**dadurch gekennzeichnet,**
daß die Rohre (1) und/oder Rippen (2) mit einer Korrosionsschutzschicht (3) versehen sind und daß die Rippen (2) und die Rohre (1) auf einem Teil ihrer Berührungsflächen durch Durchsetzfügen miteinander verbunden und im Bereich mindestens einiger dieser Fügestellen (F) miteinander verschweißt werden.

2. Verfahren nach Anspruch 1, dadurch gekennzeichnet, daß die Korrosionsschutzschicht (3) aus einem Schutzlack besteht.

3. Verfahren nach Anspruch 1, dadurch gekennzeichnet, daß die Korrosionsschutzschicht (3) aus einer Kunststoffbeschichtung besteht.

4. Verfahren nach Anspruch 1, dadurch gekennzeichnet, daß die Korrosionsschutzschicht (3) aus einem Leichtmetall oder einer Leichtmetallegierung besteht.

5. Verfahren nach Anspruch 1, dadurch gekennzeichnet, daß die Korrosionsschutzschicht (3) aus einem Schwermetall oder einer Schwermetallegierung, insbesondere Zink oder Zinklegierungen, besteht.

6. Verfahren nach mindestens einem der Ansprüche 1 bis 5, dadurch gekennzeichnet, daß das Durchsetzfügen jeweils mittels eines Stempels (St) und einer Matrize (M) erfolgt, die einen Versatz der Berührungsfläche zwischen Rippe (2) und Rohr (2) um mindestens die Wandstärke des Rohres bewirken.

7. Wärmeübertrager mit einer Mehrzahl von zumindest auf einem Teil ihrer Oberfläche mit die Wärmeübertragungsfläche vergrößernden Rippen (2) versehenen Rohren (1), wobei die Rohre (1) und Rippen (2) miteinander verschweißt sind,
**dadurch gekennzeichnet,**
daß die Rohre (1) und/oder die Rippen (2) mit einer Korrosionsschutzschicht (3) versehen sind,
daß die Rippen (2) und die Rohre (1) auf einem Teil ihrer Berührungsfläche miteinander durch Durchsetzfügen formschlüssig verbunden sind
und daß die Rippen (2) und die Rohre (1) zumindest im Bereich einiger dieser Fügestellen (F) miteinander verschweißt sind.

8. Kraftwerk mit mindestens einem Dampferzeuger zum Betrieb mindestens einer Turbine, die einen Generator zur Erzeugung elektrischer Energie antreibt, sowie mit mindestens einem Wärmeübertrager, gemäß dem Anspruch 7.

9. Verwendung des Wärmeübertrager gemäß Anspruch 7 in der Erzeugung elektrischer Energie durch ein Kraftwerk.

## Claims

1. Method of producing corrosion-resistant heat exchangers using pipes (1) which are provided at least on part of their surface with ribs (2) which increase the heat transfer surface area, the pipes (1) and ribs (2) being welded together, characterized in that the pipes (1) and/or ribs (2) are provided with an anticorrosion layer (3), and in that the ribs (2) and the pipes (1) are joined together over part of their contact surfaces by double-bending and are welded together in the region of at least some of these joins (F).

2. Method according to Claim 1, characterized in that the anticorrosion layer (3) consists of a protective paint.

3. Method according to Claim 1, characterized in that the anticorrosion layer (3) consists of a plastic coating.

4. Method according to Claim 1, characterized in that the anticorrosion layer (3) consists of a light metal or a light metal alloy.

5. Method according to Claim 1, characterized in that the anticorrosion layer (3) consists of a heavy metal or a heavy metal alloy, in particular zinc or zinc alloys.

6. Method according to at least one of claims 1 to 5, characterized in that the double-bend joining is carried out in each case by means of a ram (St) and a female mould (M), which together offset the contact surface between rib (2) and pipe (1) by at least the wall thickness of the pipe.

7. Heat exchanger having a plurality of pipes (1) which are provided at least on part of their surface with ribs (2) which increase the heat transfer surface area, the pipes (1) and ribs (2) being welded together, characterized in that the pipes (1) and/or the ribs (2) are provided with an anticorrosion layer (3), in that the ribs (2) and the pipes (1) are joined together in a form-fitting manner over part of their contact surface by double-bending, and in that the ribs (2) and the pipes (1) are welded together at least in the region of some of these joins (F).

8. Power plant having at least one steam generator for operating at least one turbine which drives a generator for generating electric power, and having at least one heat exchanger in accordance with Claim 7.

9. Use of the heat exchanger in accordance with Claim 7 in the generation of electric power by means of a power plant.

## Revendications

1. Procédé pour fabriquer des échangeurs de chaleur résistants à la corrosion en utilisant des tubes (1) pourvus, au moins sur une partie de leur surface, de nervures (2) agrandissant la surface d'échange thermique, les tubes (1) et les nervures (2) étant soudés entre eux, caractérisé en ce que les tubes (1) et/ou les nervures (2) sont pourvus d'une couche anticorrosion (3), et en ce que les nervures (2) et les tubes (1) sont reliés entre eux par assemblage par emboutissage sur une partie de leurs surfaces de contact et soudés entre eux dans la zone d'au moins quelques-uns de ces points d'assemblage (F)

2. Procédé selon la revendication 1, caractérisé en ce que la couche anticorrosion (3) est constituée par un vernis protecteur.

3. Procédé selon la revendication 1, caractérisé en ce que la couche anticorrosion (3) est constituée par un revêtement de matière synthétique.

4. Procédé selon la revendication 1, caractérisé en ce que la couche anticorrosion (3) est réalisée en métal léger ou en alliage aux métaux légers.

5. Procédé selon la revendication 1, caractérisé en ce que la couche anticorrosion (3) est réalisée en métal lourd ou en alliage aux métaux lourds, en particulier en zinc ou en alliages au zinc.

6. Procédé selon au moins une des revendications 1 à 5, caractérisé en ce que l'assemblage par emboutissage s'effectue au moyen d'un poinçon (St) et d'une matrice (M) qui engendrent un déplacement de la surface de contact entre la nervure (2) et le tube (1) au moins égal à l'épaisseur de paroi du tube.

7. Échangeur de chaleur comprenant une pluralité de tubes (1) pourvus, au moins sur une partie de leur surface, de nervures (2) agrandissant la surface d'échange thermique, les tubes (1) et les nervures (2) étant soudés entre eux, caractérisé en ce que les tubes (1) et/ou les nervures (2) sont pourvus d'une couche anticorrosion (3), en ce que les nervures (2) et les tubes (1) sont reliés entre eux par complémentarité de formes par assemblage par emboutissage sur une partie de leur surface de contact, et en ce que les nervures (2) et les tubes (1) sont soudés entre eux au moins dans la zone de quelques-uns desdits points d'assemblage (F).

8. Usine électrique comprenant au moins un générateur de vapeur pour faire fonctionner au moins une turbine qui entraîne une génératrice pour produire de l'énergie électrique, et comprenant au moins un échangeur de chaleur selon la revendication 7.

9. Utilisation de l'échangeur de chaleur selon la revendication 7 dans la production d'énergie électrique par une usine électrique.
